# EUROPEAN PATENT SPECIFICATION

(11) **EP 4 543 714 B1**
(45) Date of publication and mention of the grant of the patent: **14.01.2026**
(21) Application number: 23733082.4
(22) Date of filing: 07.06.2023
(51) Int. Cl.: B60P 7/08, B60P 7/12

(54) **FRICTION BRAKE FOR A TENSIONER, AND TENSIONER COMPRISING A FRICTION BRAKE**
REIBUNGSBREMSE FÜR EINEN SPANNER UND SPANNER MIT EINER REIBUNGSBREMSE
FREIN À FRICTION POUR UN TENDEUR, ET TENDEUR COMPRENANT UN FREIN À FRICTION

(30) Priority: 23.06.2022 SE 2250785
(43) Date of publication of application: 30.04.2025
(73) Proprietor: Exte Fabriks AB, 827 28 Färila (SE)
(72) Inventor: MCGOUGAN, Robin, 821 35 BOLLNÄS (SE)
(74) Representative: Brann AB
(86) International application number: PCT/SE2023/050571
(87) International publication number: WO 2023/249532

(56) References cited:
- CA-A1- 2 131 932
- DE-A1- 102019 118 107
- SE-B- 405 578
- US-A- 2 586 048
- US-A- 6 161 653
- US-B1- 7 094 014

## Description

### TECHNICAL FIELD

The present invention relates to a friction brake suitable for use in a tensioner for securing a load. The invention also relates to a tensioner comprising such a friction brake. The friction brake and the tensioner are intended for use both in load securing in general and for load securing on a road vehicle or a rail vehicle.

### BACKGROUND

When securing a load, a tensioner is commonly used to apply a traction force to a chain, rope, strap or wire that is anchored to a fixed structure and held around the load. The tensioner continuously pulling on the chain, rope, strap or wire causes a holding force that serves to prevent movement of the load. However, there is a risk that the load acts on the chain, rope, strap or wire with a force that is larger than the traction force from the tensioner, in particular during road transport or rail transport where vibrations may cause the load to shift. In such events, the chain, rope, strap or wire loosens its hold on the load and accidents may occur where some items in the load come loose or where the load as a whole falls or changes position, rendering the load securing inefficient or even defective. This in turn may cause serious accidents where the load falls and risks injuring persons or vehicles in the vicinity of the load. One area where this is a particular problem is when transporting lumber on a bunk since individual logs may fall from the bunk into surrounding traffic and cause injury or even death of drivers or passengers in other vehicles. Another such area is when transporting a load on an open truck or lorry or on a trailer, since parts of the load may come loose and be damaged or broken as well as causing injury to people in the vicinity of the load. Yet another such area is when transporting a load on a rail vehicle.

One known solution to the problem of securing the load in a safer and more efficient way is to increase the traction force provided by the tensioner so that a larger force would be required to counteract the tensioner. This is an expensive solution since the tensioner must be dimensioned to supply the very large traction, and the problem may still arise in situations where the load acts on the chain, rope, strap or wire with an even larger force.

Another solution is to add an additional tensioner with a separate chain, rope, strap or wire to provide a backup that is able to hold the load if the first tensioner fails. This could also solve the problem of the first tensioner suddenly malfunctioning so that no traction force at all can be provided. However, this is also an expensive solution and still does not ensure that movement of the load is prevented completely.

US 6 161 653 A discloses a friction brake with two sliders according to the preamble of claim 1. US 2 586 048 A discloses a friction brake for a tensioner for securing a load on a vehicle.

There is therefore a need for improvements within this area, to provide a tensioner that is able to secure a load in a reliable, cheap and efficient way and to withstand very large forces that seek to counteract the tensioner.

### SUMMARY

The object of the present invention is to eliminate or at least to minimize the problems discussed above. This is achieved by a friction brake for a tensioner and a tensioner according to the appended independent claims.

The friction brake of the present invention comprises a rail, a first slider on a first side of the rail and a second slider on a second side of the rail, the second side being opposite the first side. The friction brake also comprises a first connector operatively connected to a first end of the first slider, said first connector being configured to connect the friction brake to a tensioning device for providing a tensioning force, and a second connector operatively connected to a second end of the first slider, said second connector being configured to connect the friction brake to a chain, rope, strap or wire for securing a load. Furthermore, the friction brake also comprises at least one locking device with a first portion pivotably arranged on the first slider and a second portion pivotably arranged on the second slider, said first and second portion being connected by a fixed distance portion such that the locking device is configured to clamp the first and second sliders against the rail in a brake position, said brake position being a position where the first slider is displaced in relation to the second slider along the rail.

The main advantage of the present invention is that a stable and reliable mechanical brake is provided that efficiently secures the load. When a force is applied that seeks to counteract the tensioner, the friction brake is able to prevent movement of the load and at the same time protects the tensioner from such forces that could otherwise cause damage or decrease performance of the tensioner. The friction brake is also able to provide a very large brake force due to the clamping of the first slider and the second slider against the rail, such that friction between the sliders and the rail prevent any further movement along the rail. It is particularly advantageous that the locking device is protected by acting on the sliders rather than on the rail itself, since this ensures a stable operation of the locking device and a very long lifetime without risking wear or damage to the locking device itself. Another important advantage is that the friction brake is configured to brake continuously at any position along the rail. This serves to lower stresses on the lashing of the load when the friction brake engages.

Suitably, the at least one locking device comprises a second fixed distance portion also connecting the first portion to the second portion such that the locking device encloses the first slider, the second slider and the rail. Thereby, the rail is enclosed, and the locking device is held more securely in place. The provision of the second fixed distance portion also ensures that forces are applied symmetrically to the first slider and second slider, and this further improves the braking caused by the sliders being clamped against the rail.

Also, one of the fixed distance portion and the second fixed distance portion suitably comprises a guiding protrusion facing the rail. Thereby, alignment of the locking device and the rail is improved to ensure that the locking device pivots as desired when the first slider moves.

Suitably, the first portion and the second portion of the locking device are pivotably arranged on the first slider and the second slider by being held in receivers that prevent the locking device from sliding along the first slider and second slider, said receivers preferably being grooves, notches or indentations in the first slider and second slider. Thereby, sliding of the locking device along the first slider or the second slider is efficiently prevented.

Each of the receivers may also have a receiver width that is less than 0.5 mm, preferably less than 0.3 mm larger than a width of the first or second portion of the locking device held in the receiver. Thereby, a good fit of the first or second portion in the receiver is achieved, and in particular for embodiments comprising a plurality of locking devices it is ensured that they provide the same clamping force to the first slider and second slider. This in turn enables tension to be kept even on the locking devices since they are each subjected to similar strain and tension.

Suitably, the fixed distance portion in the braking position is at a first angle to a neutral position, said neutral position being a position where the first portion is directly opposite the second position, and wherein the first angle is 2°-10°, preferably 4°-5°, more preferably 4°. Thereby, the first slider and second slider are securely clamped against the rail. It is particularly advantageous to have the first angle larger than 2° since a smaller angle may require a larger release force in order for the friction brake to move from the braking position to the non-braking position. This may result in the friction brake becoming stuck in brake position due to friction forces being so large that the tensioning device would be unable to push the second slider out of the locking position when an operator desires to release the tensioner. Also, to have the first angle smaller than 10° is advantageous since this ensures that the clamping force is applied in such a way that undesired sliding of the first slider or second slider against the rail in the braking position is avoided.

In some embodiments, the friction brake also comprises a plurality of locking devices that are arranged in series in a longitudinal direction along the first slider and second slider. Thereby, the friction brake is rendered more stable, and the maximum braking force is significantly increased as compared with embodiments having only one locking device. It is also advantageous in decreasing wear on the first slider and second slider since the clamping force is applied to a larger area of the first slider and second slider. Furthermore, it decreases wear on the locking devices themselves.

Suitably, a biasing device is also provided and is arranged to bias the at least one locking device towards the brake position. Thereby, the activation time from a non-active position to a braking position is decreased.

The friction brake may also comprise a carriage arranged along the rail and operatively connected to the first connector of the first slider and configured to be connected to the traction device. The carriage also comprises a release member arranged along the rail at a first distance from the second slider in the brake position, and the first connector comprises a clearance that is larger than the first distance such that a thrust force on the carriage causes a contact between the release member and the second slider before causing a contact between the carriage and the first slider. Thereby, release of the friction brake from the braking position is improved by the second slider moving in relation to the first slider so that the locking device is pivoted away from the braking position.

The first slider may also comprise a first alignment member and the second slider may comprise a second alignment member such that a movement of the second slider caused by the release member causes a contact between the second alignment member and the first alignment member for maintaining an alignment of the first slider and second slider. Thereby, it is ensured that the locking device is not pivoted beyond the neutral position to a second braking position that could hinder operation of the tensioning device to pull on the first slider of the friction brake again after releasing it.

In some embodiments, the first alignment member and the second alignment member are protruding elements arranged on or integrated with each of the first slider and the second slider. Thereby, the alignment members are realized in a convenient and reliable way.

In other embodiments, one of the first alignment member and the second alignment member is a protruding element and the other of the first and second alignment member is a receiving recess with an end protrusion, said protruding element being arranged to extend across the rail into the receiving recess and to contact the end protrusion for maintaining the alignment of the first slider and second slider. Thereby, a stable alignment of the first and second slider is achieved, and by designing the protruding element to extend beyond the rail and at least partly enclose the rail it can further be ensured that malfunction of the friction brake due to misalignment of the sliders and the rail is further avoided.

The present invention also refers to a tensioner for securing a load. The tensioner comprises a tensioning device for providing a tensioning force, an attachment for a chain, rope, strap or wire, and a friction brake according to the present invention, wherein the first connector of the friction brake is operatively connected to the tensioning device and the second connector of the friction brake is operatively connected to the attachment.

An improved tensioner is thereby achieved, having the highly efficient and reliable friction brake with the advantages disclosed above.

In some embodiments, the tensioner also comprises a mounting arrangement for mounting the tensioner, wherein the rail is operatively connected to the mounting arrangement. Thereby, the tensioner is realized as a separate component that can be mounted in any site where it is desired to secure a load. By connecting the rail to the mounting arrangement, a stable anchoring for the rail is achieved and this also improves operation of the friction brake.

In other embodiments, the tensioner forms an integrated component in a bunk for transporting logs, and the rail is operatively connected to the bunk. Thereby, the tensioner is realized as an integrated component that is protected by the bunk and that is conveniently at hand when lumber is to be secured on the bunk. Furthermore, by connecting the rail to the bunk, a stable anchoring for the rail is achieved and this also improves operation of the friction brake.

In yet other embodiments, the tensioner forms an integrated component in a truck or a trailer, and the rail is operatively connected to the truck or trailer. Thereby, the tensioner is realized as an integrated component that is protected by the truck or trailer and that is conveniently at hand when a load is to be secured on the truck or trailer. Also, by connecting the rail to the truck or trailer, a stable anchoring for the rail is achieved and this also improves operation of the friction brake.

In some embodiments of the tensioner, the tensioning device is a hydraulic, pneumatic or electric tensioning device. Thereby, a stable and convenient tensioning device may be used, selected to fulfil the requirements of the particular application of the tensioner for securing a load.

Many additional benefits and advantages of the present invention will be readily understood by the skilled person in view of the detailed description below.

### DRAWINGS

The invention will now be described in more detail with reference to the appended drawings, wherein
- Fig. 1a: discloses a planar view from the side of a first embodiment of the friction brake of the invention in a tensioner of the invention in a non-braking position;
- Fig. 1b: discloses the embodiment of Fig. 1b in a perspective view;
- Fig. 2: discloses a planar view from the side of the first embodiment in a braking position;
- Fig. 3: discloses a planar view from the side of the first embodiment in a position where release of the brake takes place;
- Fig. 4: discloses a planar view from the side of the first embodiment in a release position where alignment members are in contact;
- Fig. 5: discloses a planar view from the side of the locking device of the first embodiment;
- Fig. 6: discloses a planar view from the side of a second embodiment of the friction brake of the invention;
- Fig. 7: discloses a planar view from the side of a third embodiment of the friction brake of the invention;
- Fig. 8a: discloses a perspective view of the tensioner of the invention in a bunk for securing lumber on a truck;
- Fig. 8b: discloses a planar view of the tensioner of Fig. 8a;
- Fig. 8c: discloses an enlarged view of the tensioner of Fig. 8b;
- Fig. 9a: discloses a planar view from the side of two tensioners of the invention in a truck for securing a load;
- Fig. 9b: discloses a planar view from the side of one of the tensioners of Fig. 9a; and
- Fig. 9c: discloses an enlarged view of the tensioner of Fig. 9b.

All the figures are schematic, not necessarily to scale, and generally only show parts which are necessary in order to elucidate the respective embodiments, whereas other parts may be omitted or merely suggested. Any reference number appearing in multiple drawings refers to the same object or feature throughout the drawings, unless otherwise indicated.

### DETAILED DESCRIPTION

The present invention will now be described in more detail, starting with a first embodiment of the friction brake where operation of the friction brake will also be explained. Next, alternative embodiments of the friction brake will be disclosed. Also, embodiments of the tensioner of the invention will be disclosed both as a separate component that can be mounted where desired and as integrated components of a bunk for transporting lumber and of a truck, lorry or trailer, or alternatively to a rail vehicle, for transporting a load.

When the different embodiments are disclosed, it is stated how they differ from each other. It is in particular to be noted that any feature not stated to differ is identical or similar to a corresponding feature of any of the other embodiments. It is also to be noted that features from different embodiments may freely be combined unless such a combination is explicitly stated as unsuitable or undesirable.

The term "operatively connected" as used herein is to be understood as one component being connected to another in such a way that a force or movement can be transferred from one to the other. Thus, operatively connected components may be integrated to form a single component or may be separate components that are connected to each other directly or with at least one intermediary component that serves to transfer the force or movement.

As mentioned above, a chain, rope, strap or wire is to be used with the friction brake 10, and in the following the term "chain" will be used to denote any or all of these options and also to include any other similar component that is suitable for placing around a load and being tensioned by a tensioner.

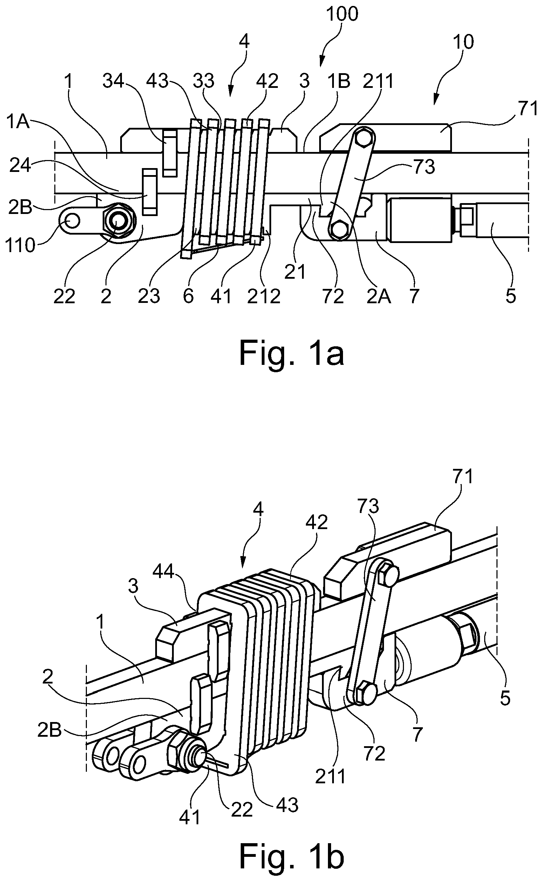

Thus, Fig. 1 discloses a first embodiment of a friction brake 10 that comprises a rail 1 that may be attached or connected to any structure such as a housing surrounding the friction brake 10 (not shown) or a component or part of a bunk, lorry, truck, trailer, railcar, or other vehicle or structure in connection with which a load is to be secured. The first embodiment of the friction brake 10 comprises a first slider 2 on a first side 1A of the rail 1 and a second slider 3 on a second side 1B of the rail 1. The first side 1A and the second side 1B are opposite sides so that the rail 1 is between the first slider 2 and the second slider 3. The friction brake 10 is shown together with a tensioning device 5 of a tensioner according to the invention.

The first slider 2 comprises a first connector 21 that is operatively connected to a first end 2A of the first slider 2 and that is configured to connect the friction brake 10 to the tensioning device 5 for providing a tensioning force. The tensioning device 5 is not a part of the friction brake 10 but is provided in the drawings and described in the text to facilitate understanding of the friction brake 10 itself. The tensioning device 5 is instead a component of the tensioner as described below.

In the first embodiment of Fig. 1a, the first connector 21 is integrated with the first slider 2 but in other embodiments the first connector 21 may be a separate component or be provided on any intermediate component that connects the first slider 2 to the tensioning device 5. That the first connector 21 is configured to connect the friction brake 10 to the tensioning device 5 is to be understood as the first connector 21 being adapted or designed to be connected to the tensioning device 5 such that a tensioning force can be transferred from the tensioning device 5 to the first connector 21. This may mean that the first connector 21 is fixedly attached to the tensioning device 5 or to any intermediary component between the tensioning device 5 and the first slider 2 or may alternatively mean that the first connector 21 is pivotably connected or connected by any other component that is able to move the first connector 21 in relation to the tensioning device 5 in response to a tensioning force from the tensioning device 5 being applied to the friction brake 10. In the first embodiment, the first connector 21 is connected to a carriage 7 that is able to pull the first connector 21 towards the tensioning device 5, but it is in particular to be noted that the carriage 7 is not necessary for the operation of the friction brake 10 but is instead an optional component that can be left out.

The first slider 21 also comprises a second connector 22 that is operatively connected to a second end 2B and that is configured to connect the friction brake 10 to a chain for securing a load. This is to be understood as the second connector 22 being fixedly attached to a chain or alternatively as being pivotably connected or connected by means of at least one intermediary component. The chain may be provided already secured to the friction brake 10 or may alternatively be attached to the second connector 22 only when the friction brake 10 is in use.

The first end 2A and the second end 2B of the first slider 2 are to be understood as portions of the first slider 2 that are suitable for connecting to the first connector 21 and the second connector 22. Thus, the first end 2A and the second end 2B are provided on different parts of the first slider 2 but it is to be noted that it is not necessary for them to be at the farthest ends of the first slider 2. Instead, they may be any portions of the first slider 2 where the first end 2A is closer to where the tensioning device 5 is when the friction brake 10 is placed in a tensioner, whereas the second end 2B is closer to where the chain should be connected.

As mentioned herein, a tensioning force is a force that acts on the friction brake 10 to pull any component of the friction brake 10 towards the tensioning device 5, i.e. to the right-hand side of Fig. 1a. A thrust force is a force that acts in the opposite direction, i.e. where the tensioning device 5 instead pushes any component of the friction brake 10 to the left-hand side of Fig. 1a. When it is said that the chain pulls on the friction brake 10, this is to be understood as the chain applying a force directed to the left-hand side of Fig. 1a on any component of the friction brake 10.

When the friction brake 10 is arranged in a tensioner (see below), the first connector 21 is connected to the tensioning device 5 and the second connector 22 is connected to the chain. This means that a tensioning force from the tensioning device is transmitted to the chain through the first slider 2.

The friction brake 10 also comprises at least one locking device 4 that is pivotably arranged on both the first slider 2 and the second slider 3 such that a movement of the first slider 2 in relation to the second slider 3 causes the locking device 4 to clamp the first slider 2 and second slider 3 against the rail 1 and thereby activate the friction brake 10. In the first embodiment a plurality of locking devices 4 are provided an operate simultaneously, but it is in particular to be noted that only one locking device 4 is necessary for reliable operation of the friction brake 10. By providing more than one locking device 4, the maximum braking force can be significantly increased, so that the friction brake 10 can easily be dimensioned for different maximum braking forces simply by selecting the number of locking devices 4.

Each of the locking devices 4 comprises a first portion 41 that is pivotably arranged on the first slider 2 and a second portion 42 that is pivotably arranged on the second slider 3. The first portion 41 and second portion 42 are connected to each other by a fixed distance portion 43 so that the distance between the first portion 41 and the second portion 42 is held constant. This may be achieved by the fixed distance portion 43 being made from a material that is not elastically deformable, and suitable materials include metals such as steel. In order for the locking device 4 to be able to activate the friction brake 10, it is sufficient that a movement of the first slider 2 in relation to the second slider 3 does not cause the fixed distance portion 43 to expand but rather to maintain its length so that the first portion 41 and the second portion 42 are brought towards the rail 1 by the movement of the first slider 2.

Thus, as used herein, a fixed distance portion is to be understood as a stiff portion that does not elastically deform but rather holds the first portion at a fixed distance from the second portion.

In the first embodiment, the locking devices 4 are designed as loops that enclose the first slider 2, second slider 3 and rail 1. The locking device 4 is thus formed as one component where the first portion 41 and second portion 42 are connected to each other by the fixed distance portion 43 on one side of the rail 1 and a second fixed distance portion 44 on another side of the rail 1 such that a closed loop is formed.

The friction brake 10 of the first embodiment also comprises a biasing device 6 that is arranged in connection with the at least one locking device 4 and that biases the locking device 4 towards a brake position where the brake is activated. In the first embodiment, the biasing device 6 is a leaf spring but in other embodiments other springs or other kinds of biasing devices may alternatively be used. The benefit of the biasing device 6 is that the at least one locking device 4 is brought closer to the brake position so that an activation time of the brake is shortened. This will be explained further below when operation of the friction brake 10 is discussed.

In particular, the biasing device 6 is advantageous in embodiments where a plurality of locking devices 4 are provided, since the biasing device 6 connects the locking devices 4 to each other and ensures that they pivot together.

In embodiments lacking a biasing device 6, another connection of the locking devices 4 may be provided by a connection member (not shown) contacting the locking devices 4 such that they are able to pivot together.

Also provided in the first embodiment is the carriage 7 that connects the first connector 21 to the tensioning device 5 by a contact portion 72 forming a hook that transfers the tensioning force from the tensioning device 5 to a meeting contact portion 211 of the first connector 21. The first connector 21 is in this embodiment provided with a clearance such that a play is formed. This means that a tensioning force from the tensioning device 5 is transferred to the first slider 2 by the contact portion 72 pulling on the meeting contact portion 211, but that a thrust force from the tensioning device 5 is not transferred to the first slider 2 until the contact portion 72 has passed the clearance and contacts an opposite meeting surface 212. In some embodiments, the clearance may be large enough to prevent the contact portion 72 from ever contacting the opposite meeting surface 212.

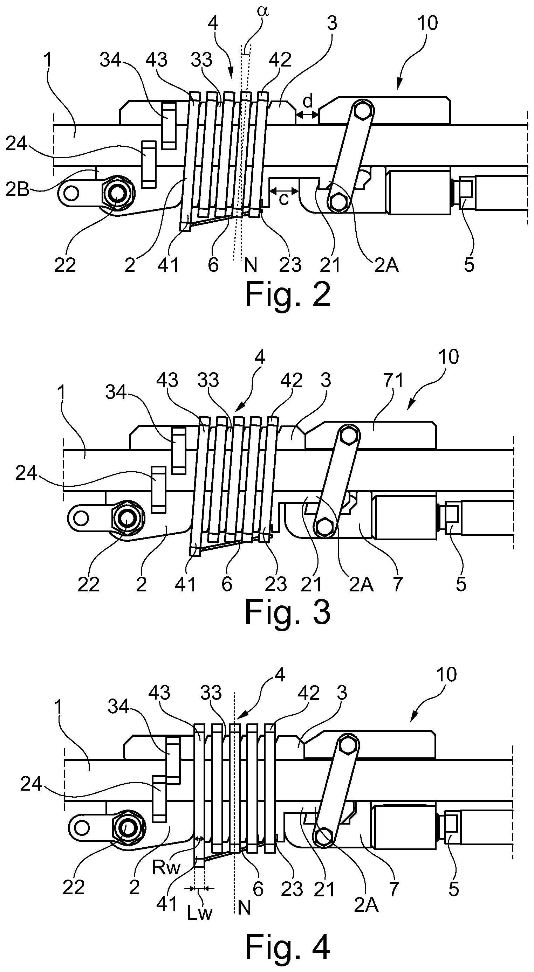

The carriage 7 is in the first embodiment also provided with a release member 71 that is arranged at a distance from the second slider 3. This means that the release member 71 does not interact with the second slider 3 while the tensioning force is applied by the tensioning device 5 to the first connector 21 but that a thrust force from the tensioning device 5 will be applied from the release member 71 to the second slider 3 as soon as the release member 71 has moved to close the distance between them. This will be explained in more detail below with reference to Fig. 2-4.

The release member 71 is in the first embodiment an integral part of the carriage 7 and is located on the second side 1B of the rail 1 and connected to the rest of the carriage 7 by a portion of the carriage 7 extending across the rail to form the release member 71 (i.e. behind the rail as shown in Fig. 1a). Suitably, a stabilizing member 73 is also provided to connect the release member 71 to the carriage 7 such that the rail 1 is enclosed. This is advantageous in preventing misalignment of the carriage 7 and the rail 1 but is not necessary for the operation of the invention as such.

The operation of the friction brake 10 will now be described with reference to Fig. 1-4.

When the friction brake 10 is in operation, it is connected to the tensioning device 5 and also to a chain. In Fig. 1a, the friction brake 10 is shown in a non-activated state where a tensioning force that is continuously applied to the first slider 2 by the carriage 7 that is connected to the tensioning device 5 is counteracted by the chain pulling on the second connector 22 of the first slider 2. Fig. 1a-b disclose the friction brake 10 in a state where the friction brake 10 is not activated and in this state the first slider 2 and second slider 3 are able to slide in relation to the rail 1. Typically, the chain has a second end (see descriptions of the tensioner below) that is not fastened to the friction brake 10 but instead securely fixed to another structure so that the chain is able to hold the load in place with the second end fixed and a first end attached to the friction brake 10.

As long as the chain does not pull on the friction brake 10 with a force larger than the tensioning force of the tensioning device 5, the friction brake 10 will be held in the non-activated state and enable a transmission of the traction force from the tensioning device 5 to the chain so that the load is held securely in place. If the chain is subjected to a force larger than the tensioning force, the chain pulls the first slider 2 to the left-hand side of Fig. 1a and this takes the friction brake 10 to a brake position shown in Fig. 2. In this position, the first slider 2 is moved to the left-hand side but since the chain does not pull on the second slider 3 also, a displacement of the first slider 2 in relation to the second slider 3 is created. The at least one locking device 4 is pivoted in a clockwise direction in Fig. 2 and this in turn causes the first slider 2 and the second slider 3 to be clamped by the locking device 4 against the rail 1, thereby activating the brake. In the brake position, the locking device 4 is at a first angle α to a neutral position N and the first angle α is preferably 2°-10°, more preferably 4°-5°, and even more preferably 4°. Due to the biasing device 6, the locking devices 4 of the first embodiment are held close to the brake position even when the brake is not activated, and this decreases the play or clearance that the locking devices 4 need to move to reach the brake position. Thereby, the chain is braked quickly, and movement of the load is efficiently prevented.

One benefit of the present invention is that the brake lacks any fixed brake position but is instead continuous in its ability to brake. In the prior art, intervals of 100 mm are typically provided between fixed locking positions. This can cause very high stresses on the lashing of the load if the load has a distance to move before it is abruptly stopped. By instead providing the continuous operation of the friction brake 10 according to the present invention, a softer braking is achieved and movements due to slackening of the chain are efficiently avoided.

In the first embodiment, the braking position is reached when the locking devices 4 are pivoted in the clockwise direction to the first angle α in relation to the neutral position N (see Fig. 2) The neutral position N is where the fixed distance portions 43 are held perpendicular to the rail 1, or in other words where the first slider 2 is directly opposite the second slider 3 so that the first portion 41 and second portion 42 of the locking device 4 are directly opposite each other.

When the brake is active, friction between the first slider 2 and the rail 1 and also between the second slider 3 and the rail 1 efficiently prevents the friction brake 10 from being moved and thereby also prevents the chain from pulling on the tensioning device 5. This in turn protects the tensioning device 5 from being worn or damaged, thereby increasing its lifetime. It also prevents the chain from slacking and thereby holds the load in place, efficiently preventing items of the load or logs in a stack of lumber from coming loose or causing accidents.

When the force on the first slider 2 from the chain is no longer larger than the tensioning force from the tensioning device 5, the tensioning device 5 is able to pull the first slider 2 towards the right-hand side of Fig. 2 and thereby release the brake since the locking devices are pivoted in the counter-clockwise direction as the first slider 2 moves to the right in relation to the second slider 3.

In embodiments including the carriage 7 with the release member 71, as shown in the first embodiment of Fig. 1-4, another mode of releasing the friction brake 10 is also available. As already mentioned above, the release member 71 is at a distance from the second slider 3 in the brake position, and this distance may be referred to as a first distance d. At the same time, a clearance c is provided between the contact portion 72 and the opposing meeting surface 212 and this clearance c is larger or equal to the first distance d. In order to release the brake, the tensioning device 5 in this embodiment acts on the carriage 7 with a thrust force that pushes the carriage 7 to the left-hand side of Fig. 2. When the carriage 7 is moved to close the distance between the release member 71 and the second slider 3, the position of Fig. 3 is reached where the release member 71 starts to push the second slider 3. When the second slider 3 moves, the locking devices 4 are pivoted in the counter-clockwise direction and the brake position is released so that the friction brake 10 is again able to slide in relation to the rail 1. When the carriage 7 continues to move to the left, the neutral position of Fig. 4 is reached where the locking devices 4 are held along the neutral axis N and where the release member 71 pushes the second slider 3 as the contact portion 72 pushes on the first slider 2.

In the neutral position, a first alignment member 24 on the first slider 2 contacts a second alignment member 34 on the second slider 3 and thereby prevent a misalignment between the first slider 2 and second slider 3. In the first embodiment, the first and second alignment members 24, 34 are protruding elements that are arranged on the first slider 2 and second slider 3, respectively. Alternatively, the first and second alignment members 24, 34 may be integrated with the first slider 2 and second slider 3 or may have any other design as long as they are able to prevent the second slider 3 from being pushed to a position where the locking devices 4 are pivoted to a second locking position further counterclockwise of the neutral position N of Fig. 4. Such a second locking position would be disadvantageous since it would in some cases prevent the tensioning device 5 from moving the friction brake 10 by pulling on the first slider 2 again after the friction brake 10 has been released. The purpose of the friction brake 10 is to brake any movement caused by the chain but to leave the tensioning device 5 to operate as desired without hindering either a tensioning or a thrust force on the friction brake 10.

The locking devices 4 are held in receivers 23, 33 on the first and second sliders 2, 3 to enable them to pivot and to prevent the locking devices 4 from sliding along the first and second sliders 2, 3. In the first embodiment, this is realized by the first portion 41 of each locking device 4 being held in a receiver 23 on the first slider 2 and the second portion 42 being held in a receiver 33 on the second slider 3. The receivers 23, 33 are disclosed as grooves, indentations or notches in the first and second sliders 2, 3 but may in other embodiments be designed in different ways as long as they are able to pivotably hold the first and second portions 41, 42 and prevent them from sliding along the first and second sliders 2, 3.

It is advantageous if the receivers 23, 33 are larger than the first or second portion 41, 42 held in the receiver 23, 33, but also that the receivers 23, 33 have a receiver width Rw that is less than 0.5 mm, preferably less than 0.3 mm larger than a width Lw of the first or second portion 41, 42 or the locking device 4 held in said receiver 23, 33 (see Fig. 4). This ensures that the first or second portion 41, 42 fits snugly in the receiver 23, 33 and is able to pivot without sliding in the receiver 23, 33 in a direction along the rail 1. In particular, it is advantageous in embodiment comprising a plurality of locking devices 4, since a good fit of the first and second portions 41, 42 in the receivers 23, 33 ensures that the locking devices 4 pivot together and that the clamping force from each locking device 4 on the first and second sliders 2, 3 are similar or identical. This in turn ensures that tension on the locking devices 4 is evenly distributed so that they are not tensioned above yield limit. This in turn serves to minimize the risk of damaging or breaking the locking devices.

In one embodiment, the width Lw of the first and second portions 41, 42 of the locking device 4 may be 6 mm, whereas the width of the receivers 23, 33 may be 6.2 mm. In such an embodiment, each of the first and second portions 41, 42 have the same width Lw and each of the receivers 23, 33 has the same receiver width R2, but in other embodiments it may differ so that dimensions of the first portion 41 differs from the second portion 42 or so that dimensions of one locking device 4 are different from at least one other locking device 4 of the friction brake 10.

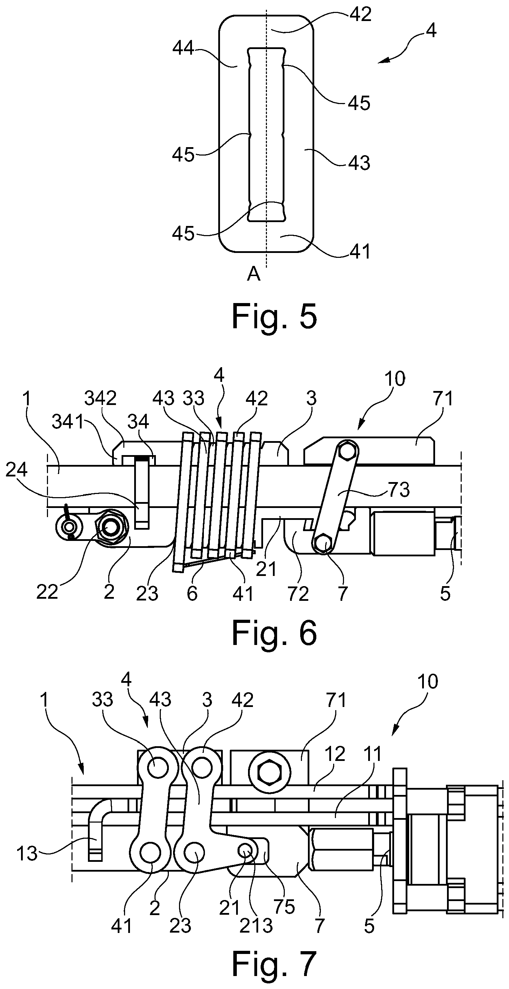

Fig. 5 discloses a locking device 4 of the first embodiment in a planar view from the side, showing the first portion 41 and second portion 42 being connected to each other by the fixed distance portion 43 and the second fixed distance portion 44 so that a loop is formed that in use is able to enclose the sliders 2, 3 and the rail 1. Also shown in the Figure are guiding protrusions 45 that are arranged on the locking device 4 facing inwards into the through-hole at the centre of the loop. It is advantageous to provide at least one guiding protrusion 45 that guides the locking device 4 as it pivots in relation to the sliders 2, 3 and the rail 1 and particularly advantageous to provide a plurality of guiding protrusions 45 that are symmetrical about a vertical axis A in Fig. 5 so that the guiding protrusions 45 are able to contact the first and second sliders 2, 3 symmetrically.

When using only one locking device 4, the friction brake 10 may be able to withstand a force of the chain on the friction brake 10 of 8 000 N, and this can be increased by increasing dimensions of the locking device 4. When using a plurality of locking devices 4, their number and dimensions may be selected to provide a much higher brake force. Typically, using five locking devices 4, the friction brake 10 is able to withstand a force of up to 40 000 N. The locking devices 4 are typically dimensioned to also provide a 20 % security margin to be able to withstand even larger forces.

Fig. 6 discloses a second embodiment of the friction brake 10 that differs from the first embodiment mainly in the first alignment member 24 being formed as a protruding element and the second alignment member 34 being formed as a receiving recess with an end protrusion 341. The first alignment member 24 extends from the first slider 2 across the rail 1 and into the receiving recess 34 where it is able to slide until it reaches the end protrusion 341. Thus, when the brake is released as described above, the second embodiment provides alignment between the first and second sliders 2, 3 by the first alignment member 24 contacting the end protrusion 341 of the second alignment member 34. Another way of describing the second alignment member 34 is to say that is comprises an extension 342 of the second slider 3 at a distance from the rail 1 with the end protrusion 341 extending towards the rail 1 in order to trap the first alignment member 24.

In some embodiments based on the second embodiment, the first alignment member 24 may be formed as a hook that extends across the rail 1 and enters the recess of the second alignment member 34, but in other embodiments the first alignment member 24 may form a loop together with the first slider 2 to enclose the rail 1.

Fig. 7 discloses a third embodiment that differs from the first and second embodiments by the locking devices 4 being formed as pivotable links that are mounted on protruding receivers 23, 33 in the form of pins extending from the first and second sliders 2, 3. The links comprise the first portion 41 and second portion 42 as end portions with openings that fit around the receivers 23, 33 so that the links are able to pivot as the sliders 2, 3 move. In the third embodiment, the first connector 21 is also connected to the first slider 2 by one of the locking devices 4 and interacts with the carriage 7 by a pin 213 extending through an opening 75 with a clearance so that the carriage 7 is able to release the brake by the release member 71 contacting the second slider 3 before the carriage 7 contacts the first slider 2 by means of the first connector 21 on the locking device 4.

In the third embodiment, the rail 1 comprises a first rail 11 and a second rail 12 with a movable rail 13 between them. The movable rail 13 is mounted on or embedded in the first slider 2 to provide additional friction between the movable rail 13 and the first rail 11 and second rail 12. When the friction brake 10 engages, the friction is significantly increased since the at least one locking device 4 clamps the first rail 11 and the second rail 12 against the movable rail. Thereby, friction arises not only between the first slider 2 and the first rail 11 and between the second slider 3 and the second rail 12, but also between the first rail 11 and the movable rail 13, as well as between the second rail 12 and the movable rail 13. In use, a friction brake 10 comprising the slidable rail 13 between the first and second rails 11, 12 has a brake force that is up to twice as large as the same friction brake 10 with only one rail 1.

The tensioner 100 according to the invention will now be described in more detail. The tensioner 100 may be designed either as a stand-alone unit that can be mounted on any vehicle or structure where a load is to be secured, or as an integrated unit mounted in a structure or vehicle for load securing or load transport.

The tensioner 100 of the present invention comprises the components of the friction brake 10 according to any embodiment described herein, and also comprises the tensioning device 5 and an attachment 110 for the chain, rope, strap or wire (see Fig. 1). By providing the friction brake 10 together with the tensioning device 5 operatively connected to the first connector 21 and the attachment 110 operatively connected to the second connector 22, the tensioner 100 is able to secure a load by pulling on the chain, rope, strap or wire. It is also able to brake any traction forces that are larger than a tensioning force from the tensioning device 5, due to the function of the friction brake 10 as described above.

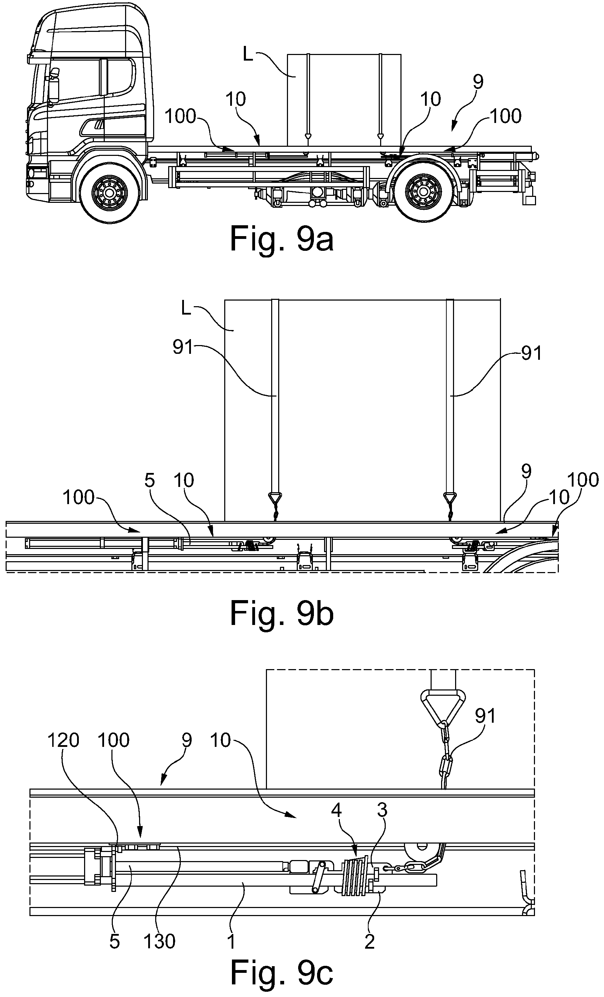

When the tensioning device 100 is provided as a stand-alone unit, a mounting arrangement 120 (see Fig. 9c) is also provided for mounting the tensioning device 100 on any vehicle or structure for securing a load. The rail 1 of the tensioning device 100 is also operatively connected to the mounting arrangement 120 to ensure that the friction brake 10 is able to operate and withstand large forces. The mounting arrangement 120 may comprise a mounting bracket or similar and may be mounted on the vehicle or structure by any suitable fastening means such as screws or bolts, or may alternatively be fastened by welding or similar. Suitably, the tensioning device 100 also comprises a housing 130 that surrounds the components of the friction brake 10 and protects against dirt, dust or moisture that could otherwise decrease performance or cause wear on the components of the friction brake 10.

Fig. 9c discloses the tensioning device 100 on a truck or lorry 9, and this Figure may be taken to disclose the tensioning device 100 as a stand-alone unit fastened by the mounting arrangement 120 or alternatively as an integrated unit that is housed in a frame or similar of the truck or lorry 9 (see below).

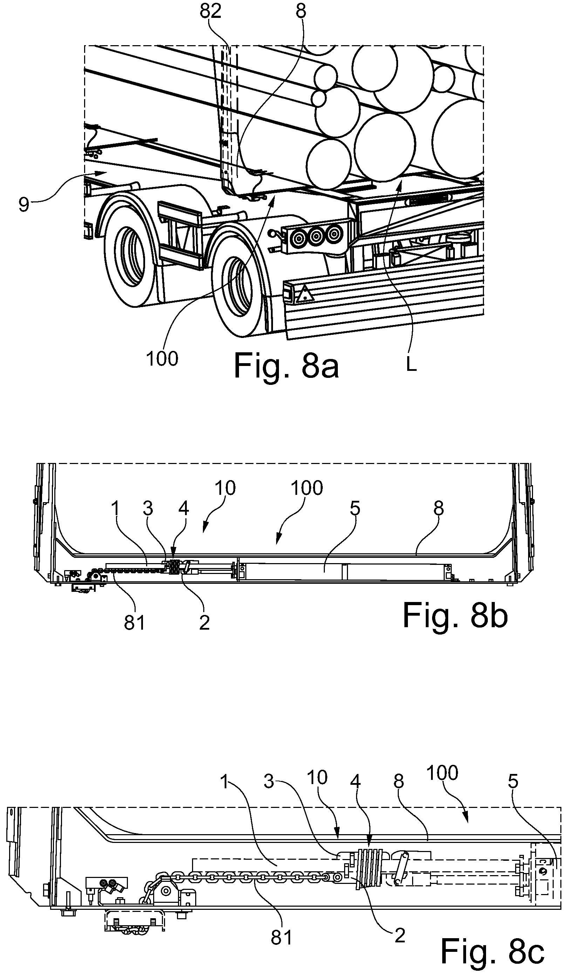

Fig. 8a-8c disclose the tensioner 100 as an integrated unit in a bunk 8 for transporting logs L on a truck 9 or the trailer of a truck. The bunk 8 comprises stakes 82 between which the logs L are placed, and one end of the chain, rope, strap or wire 81 is attached to a fixed attachment (not shown) with the other end of the chain 81 being attached to the attachment 110 of the tensioner 100. By the chain 81 being placed around the logs L, the load is secured to the bunk 8. When the tensioner 100 is provided as an integrated component in the bunk 8, the rail 1 is operatively connected to the bunk 8 so that the friction brake 10 is able to operate and withstand large forces.

Fig. 9a-9c disclose the tensioner 100 either as a stand-alone unit mounted on a truck 9 or as an integrated component in a frame of the truck 9. The load L is placed on the truck 9, and the chain 91 is attached to a fixed attachment (not shown) and to the attachment 110 of the tensioner 100. In Fig. 9a-9c two tensioners 100 are disclosed and it is in particular to be noted that any number of tensioners 100 may be used and that they may be stand-alone units, integrated units or a combination thereof. When the tensioner 100 is provided as an integrated component in the truck 9, the rail 1 is operatively connected to the truck 9 itself.

The terms "truck" and "lorry" are used interchangeably herein to denote any road vehicle for transporting a load. What is said herein about providing the tensioner integrated with a truck or lorry is also to be understood as referring to the tensioner being provided integrated with a trailer for a truck.

The tensioner 100 of the present invention may also form an integrated component on a rail vehicle for transporting a load. This is realized in an identical or similar way as the tensioner 100 of Fig. 9a-9c.

The tensioning device 5 of the tensioner 100 may be a hydraulic, pneumatic or electric tensioning device. It may be operated continuously or intermittently and may be controlled on site or remotely.

## Claims

1. Friction brake for a tensioner for securing a load, the friction brake (10) comprising
- a rail (1),
- a first slider (2) on a first side of the rail (1),
- a second slider (3) on a second side of the rail (1), the second side being opposite the first side, the friction brake being **characterised in that** it further comprises:
- a first connector (21) operatively connected to a first end (2A) of the first slider (2), said first connector (21) being configured to connect the friction brake (10) to a tensioning device (5) for providing a tensioning force,
- a second connector (22) operatively connected to a second end (2B) of the first slider (2), said second connector (22) being configured to connect the friction brake (10) to a chain, rope, strap or wire for securing a load,
- wherein the friction brake (10) further comprises at least one locking device (4) with a first portion (41) pivotably arranged on the first slider (2) and a second portion (42) pivotably arranged on the second slider (3), said first and second portion (41, 42) being connected by a fixed distance portion (43) such that the locking device (4) is configured to clamp the first and second sliders (2, 3) against the rail (1) in a brake position, said brake position being a position where the first slider (2) is displaced in relation to the second slider (3) along the rail (1).

2. Friction brake according to claim 1, wherein the at least one locking device (4) comprises a second fixed distance portion (44) also connecting the first portion (41) to the second portion (42) such that the locking device (4) encloses the first slider (2), the second slider (3) and the rail (1).

3. Friction brake according to claim 2, wherein at least one of the fixed distance portion (43) and the second fixed distance portion (44) comprises at least one guiding protrusion (45) facing the rail (1).

4. Friction brake according to any of claims 1-3, wherein the first portion (41) and the second portion (42) of the locking device (4) are pivotably arranged on the first slider (2) and the second slider (3) by being held in receivers (23, 33) that prevent the locking device (4) from moving along the first slider (2) and the second slider (3), said receivers (23, 33) preferably being grooves, notches or indentations in the first slider (2) and second slider (3).

5. Friction brake according to claim 4, wherein each of the receivers (23, 33) has a receiver width that is less than 0.5 mm, preferably less than 0.3 mm larger than a width of the first or second portion of the locking device (4) held in said receiver (23, 33).

6. Friction brake according to any previous claim, wherein the fixed distance portion (43) and optionally the second fixed distance portion (44) in the braking position is at a first angle (α) to a neutral position (N), said neutral position being a position where the first portion (41) is directly opposite the second portion (42), and wherein the first angle is 2°-10°, preferably 4°-5°, more preferably 4°

7. Friction brake according to any previous claim, further comprising a plurality of locking devices (4) that are arranged in series in a longitudinal direction along the first slider (2) and the second slider (3).

8. Friction brake according to any previous claim, further comprising a biasing device (6) arranged to bias the at least one locking device (4) towards the brake position.

9. Friction brake according to any previous claim, further comprising a carriage (7) arranged along the rail (1) and operatively connected to the first connector (21) of the first slider (2) and configured to be connected to the tensioning device (5), and wherein the carriage (7) also comprises a release member (71) arranged along the rail (1) at a first distance (d) from the second slider in the brake position, wherein further the first connector comprises a clearance (c) that is larger than the first distance (d) such that a thrust force on the carriage causes a contact between the release member (71) and the second slider (3) before causing a contact between the carriage (7) and the first slider (2).

10. Friction brake according to claim 9, wherein the first slider (2) comprises a first alignment member (24) and the second slider (3) comprises a second alignment member (34), and wherein a movement of the second slider (3) caused by the release member (71) causes a contact between the second alignment member (34) and the first alignment member (24) for maintaining an alignment of the first slider (2) and the second slider (3).

11. Friction brake according to claim 10, wherein the first alignment member (24) and the second alignment member (34) are protruding elements arranged on or integrated with each of the first slider (2) and the second slider (3).

12. Friction brake according to claim 10, wherein one of the first alignment member (24) and the second alignment member (34) is a protruding element and wherein the other of the first and second alignment member (24, 34) is a receiving recess with an end protrusion (341), said protruding element being arranged to extend across the rail (1) into the receiving recess and to contact the end protrusion (341) for maintaining the alignment of the first slider (2) and the second slider (3).

13. Tensioner for securing a load, the tensioner comprising
- a tensioning device (5) for providing a tensioning force,
- an attachment (110) for a chain, rope, strap or wire,
- a friction brake (10) according to any of claims 1-12, wherein the first connector (21) of the friction brake (10) is operatively connected to the tensioning device (5) and the second connector (22) of the friction brake (10) is operatively connected to the attachment (110).

14. Tensioner according to claim 13, further comprising
- a mounting arrangement (120) for mounting the tensioner (100), wherein the rail (1) is operatively connected to the mounting arrangement.

15. Tensioner according to claim 13, wherein the tensioner (10) forms an integrated component in a bunk for transporting logs, and wherein the rail (1) is operatively connected to the bunk.

16. Tensioner according to claim 13, wherein the tensioner (10) forms an integrated component in a truck or a trailer, and wherein the rail (1) is operatively connected to the truck or trailer.

17. Tensioner according to claim 13, wherein the tensioner (100) forms an integrated component on a rail vehicle, and wherein the rail (1) is operatively connected to the rail vehicle.

18. Tensioner according to any of claims 13-17, wherein the tensioning device (5) is a hydraulic, pneumatic or electric tensioning device.

## Patentansprüche

1. Reibungsbremse für einen Spanner zum Sichern einer Ladung, wobei die Reibungsbremse (10) Folgendes aufweist:
- eine Schiene (1),
- einen ersten Schieber (2) auf einer ersten Seite der Schiene (1),
- einen zweiten Schieber (3) auf einer zweiten Seite der Schiene (1), wobei die zweite Seite der ersten Seite gegenüberliegt, wobei die Reibungsbremse **dadurch gekennzeichnet ist, dass** sie ferner Folgendes aufweist:
- ein erstes Verbindungselement (21), das funktionsmäßig mit einem ersten Ende (2A) des ersten Schiebers (2) verbunden ist, wobei das erste Verbindungselement (21) dafür konfiguriert ist, die Reibungsbremse (10) mit einer Spannvorrichtung (5) zu verbinden, um eine Spannkraft bereitzustellen,
- ein zweites Verbindungselement (22), das funktionsmäßig mit einem zweiten Ende (2B) des ersten Schiebers (2) verbunden ist, wobei das zweite Verbindungselement (22) dafür konfiguriert ist, die Reibungsbremse (10) mit einer Kette, einem Seil, einem Gurt oder einem Draht zum Sichern einer Ladung zu verbinden,
- wobei die Reibungsbremse (10) ferner mindestens eine Verriegelungsvorrichtung (4) mit einem ersten Abschnitt (41), der schwenkbar am ersten Schieber (2) angeordnet ist, und einem zweiten Abschnitt (42), der schwenkbar am zweiten Schieber (3) angeordnet ist, aufweist, wobei der erste und der zweite Abschnitt (41, 42) durch einen festen Abstandsabschnitt (43) verbunden sind, sodass die Verriegelungsvorrichtung (4) dafür konfiguriert ist, den ersten und den zweiten Schieber (2, 3) in einer Bremsposition gegen die Schiene (1) zu klemmen, wobei die Bremsposition eine Position ist, in der der erste Schieber (2) in Bezug auf den zweiten Schieber (3) entlang der Schiene (1) verschoben ist.

2. Reibungsbremse nach Anspruch 1, wobei die mindestens eine Verriegelungsvorrichtung (4) einen zweiten festen Abstandsabschnitt (44) aufweist, der ebenfalls den ersten Abschnitt (41) mit dem zweiten Abschnitt (42) verbindet, sodass die Verriegelungsvorrichtung (4) den ersten Schieber (2), den zweiten Schieber (3) und die Schiene (1) umschließt.

3. Reibungsbremse nach Anspruch 2, wobei mindestens einer von dem festen Abstandsabschnitt (43) und dem zweiten festen Abstandsabschnitt (44) mindestens einen Führungsvorsprung (45) aufweist, der der Schiene (1) zugewandt ist.

4. Reibungsbremse nach einem der Ansprüche 1 bis 3, wobei der erste Abschnitt (41) und der zweite Abschnitt (42) der Verriegelungsvorrichtung (4) schwenkbar am ersten Schieber (2) und am zweiten Schieber (3) angeordnet sind, indem sie in Aufnahmen (23, 33) gehalten werden, die verhindern, dass sich die Verriegelungsvorrichtung (4) entlang des ersten Schiebers (2) und des zweiten Schiebers (3) bewegt, wobei die Aufnahmen (23, 33) vorzugsweise Nuten, Kerben oder Vertiefungen im ersten Schieber (2) und im zweiten Schieber (3) sind.

5. Reibungsbremse nach Anspruch 4, wobei jede der Aufnahmen (23, 33) eine Aufnahmebreite aufweist, die weniger als 0,5 mm, vorzugsweise weniger als 0,3 mm größer ist als eine Breite des ersten oder zweiten Abschnitts der Verriegelungsvorrichtung (4), die in der Aufnahme (23, 33) gehalten werden.

6. Reibungsbremse nach einem der vorhergehenden Ansprüche, wobei der feste Abstandsabschnitt (43) und optional der zweite feste Abstandsabschnitt (44) in der Bremsposition in einem ersten Winkel (α) zu einer neutralen Position (N) stehen, wobei die neutrale Position eine Position ist, in der der erste Abschnitt (41) direkt gegenüber dem zweiten Abschnitt (42) liegt, und wobei der erste Winkel 2° bis 10°, vorzugsweise 4° bis 5°, stärker bevorzugt 4° beträgt.

7. Reibungsbremse nach einem der vorhergehenden Ansprüche, ferner aufweisend eine Vielzahl von Verriegelungsvorrichtungen (4), die in Reihe in einer Längsrichtung entlang des ersten Schiebers (2) und des zweiten Schiebers (3) angeordnet sind.

8. Reibungsbremse nach einem der vorhergehenden Ansprüche, ferner aufweisend eine Vorspannvorrichtung (6), die so angeordnet ist, dass sie die mindestens eine Verriegelungsvorrichtung (4) in Richtung der Bremsposition vorspannt.

9. Reibungsbremse nach einem der vorhergehenden Ansprüche, ferner aufweisend einen Schlitten (7), der entlang der Schiene (1) angeordnet ist und funktionsmäßig mit dem ersten Verbindungselement (21) des ersten Schiebers (2) verbunden ist und dafür konfiguriert ist, mit der Spannvorrichtung (5) verbunden zu werden, und wobei der Schlitten (7) auch ein Freigabeglied (71) aufweist, das entlang der Schiene (1) in einem ersten Abstand (d) vom zweiten Schieber in der Bremsposition angeordnet ist, wobei ferner das erste Verbindungselement einen Spielraum (c) aufweist, der größer ist als der erste Abstand (d), sodass eine auf den Schlitten wirkende Schubkraft einen Kontakt zwischen dem Freigabeglied (71) und dem zweiten Schieber (3) bewirkt, bevor ein Kontakt zwischen dem Schlitten (7) und dem ersten Schieber (2) bewirkt wird.

10. Reibungsbremse nach Anspruch 9, wobei der erste Schieber (2) ein erstes Ausrichtungsglied (24) aufweist und der zweite Schieber (3) ein zweites Ausrichtungsglied (34) aufweist, und wobei eine durch das Freigabeglied (71) verursachte Bewegung des zweiten Schiebers (3) einen Kontakt zwischen dem zweiten Ausrichtungsglied (34) und dem ersten Ausrichtungsglied (24) bewirkt, um eine Ausrichtung des ersten Schiebers (2) und des zweiten Schiebers (3) aufrechtzuerhalten.

11. Reibungsbremse nach Anspruch 10, wobei das erste Ausrichtungsglied (24) und das zweite Ausrichtungsglied (34) vorstehende Elemente sind, die an jedem von dem ersten Schieber (2) und dem zweiten Schieber (3) angeordnet oder in diese integriert sind.

12. Reibungsbremse nach Anspruch 10, wobei eines von dem ersten Ausrichtungsglied (24) und dem zweiten Ausrichtungsglied (34) ein vorstehendes Element ist und wobei das andere von dem ersten und dem zweiten Ausrichtungsglied (24, 34) eine Aufnahmeaussparung mit einem Endvorsprung (341) ist, wobei das vorstehende Element so angeordnet ist, dass es sich über die Schiene (1) in die Aufnahmeaussparung erstreckt und den Endvorsprung (341) berührt, um die Ausrichtung des ersten Schiebers (2) und des zweiten Schiebers (3) aufrechtzuerhalten.

13. Spanner zum Sichern einer Ladung, wobei der Spanner Folgendes aufweist:
- eine Spannvorrichtung (5) zum Bereitstellen einer Spannkraft,
- eine Befestigung (110) für eine Kette, ein Seil, einen Gurt oder einen Draht,
- eine Reibungsbremse (10) nach einem der Ansprüche 1 bis 12, wobei das erste Verbindungselement (21) der Reibungsbremse (10) funktionsmäßig mit der Spannvorrichtung (5) verbunden ist und das zweite Verbindungselement (22) der Reibungsbremse (10) funktionsmäßig mit der Befestigung (110) verbunden ist.

14. Spanner nach Anspruch 13, ferner aufweisend
- eine Montageanordnung (120) zum Montieren des Spanners (100), wobei die Schiene (1) funktionsmäßig mit der Montageanordnung verbunden ist.

15. Spanner nach Anspruch 13, wobei der Spanner (10) einen integrierten Bestandteil in einer Halterung zum Transportieren von Baumstämmen bildet und wobei die Schiene (1) funktionsmäßig mit der Halterung verbunden ist.

16. Spanner nach Anspruch 13, wobei der Spanner (10) einen integrierten Bestandteil in einem Lastkraftwagen oder einem Anhänger bildet und wobei die Schiene (1) funktionsmäßig mit dem Lastkraftwagen oder dem Anhänger verbunden ist.

17. Spanner nach Anspruch 13, wobei der Spanner (100) einen integrierten Bestandteil eines Schienenfahrzeugs bildet und wobei die Schiene (1) funktionsmäßig mit dem Schienenfahrzeug verbunden ist.

18. Spanner nach einem der Ansprüche 13 bis 17, wobei die Spannvorrichtung (5) eine hydraulische, pneumatische oder elektrische Spannvorrichtung ist.

## Revendications

1. Frein à friction pour un tendeur destiné à fixer une charge, le frein à friction (10) comprenant :
- un rail (1),
- un premier curseur (2) sur un premier côté du rail (1),
- un deuxième curseur (3) sur un deuxième côté du rail (1), le deuxième côté étant opposé au premier côté,
le frein à friction étant **caractérisé en ce qu'**il comprend en outre :
- un premier connecteur (21) connecté de manière opérationnelle à une première extrémité (2A) du premier curseur (2), ledit premier connecteur (21) étant configuré pour connecter le frein à friction (10) à un dispositif de tension (5) afin de fournir une force de tension,
- un deuxième connecteur (22) connecté de manière opérationnelle à une deuxième extrémité (2B) du premier curseur (2), ledit deuxième connecteur (22) étant configuré pour connecter le frein à friction (10) à une chaîne, une corde, une sangle ou un fil métallique pour fixer une charge,
- dans lequel le frein à friction (10) comprend en outre au moins un dispositif de verrouillage (4) avec une première partie (41) disposée de manière pivotante sur le premier curseur (2) et une deuxième partie (42) disposée de manière pivotante sur le deuxième curseur (3), lesdites première et deuxièmes parties (41, 42) étant connectées par une partie à distance fixe (43) de telle sorte que le dispositif de verrouillage (4) est configuré pour serrer les premier et deuxième curseurs (2, 3) contre le rail (1) dans une position de freinage, ladite position de freinage étant une position dans laquelle le premier curseur (2) est déplacé par rapport au deuxième curseur (3) le long du rail (1).

2. Frein à friction selon la revendication 1, dans lequel le au moins un dispositif de verrouillage (4) comprend une deuxième partie à distance fixe (44) connectant également la première partie (41) à la deuxième partie (42) de telle sorte que le dispositif de verrouillage (4) entoure le premier curseur (2), le deuxième curseur (3) et le rail (1).

3. Frein à friction selon la revendication 2, dans lequel au moins l'une parmi la partie à distance fixe (43) et la deuxième partie à distance fixe (44) comprend au moins une saillie de guidage (45) faisant face au rail (1).

4. Frein à friction selon l'une quelconque des revendications 1 à 3, dans lequel la première partie (41) et la deuxième partie (42) du dispositif de verrouillage (4) sont disposées de manière pivotante sur le premier curseur (2) et le deuxième curseur (3) en étant maintenues dans des récepteurs (23, 33) qui empêchent le dispositif de verrouillage (4) de se déplacer le long du premier curseur (2) et du deuxième curseur (3), lesdits récepteurs (23, 33) étant de préférence des rainures, des encoches ou des indentations dans le premier curseur (2) et le deuxième curseur (3).

5. Frein à friction selon la revendication 4, dans lequel chacun des récepteurs (23, 33) a une largeur de récepteur inférieure à 0,5 mm, de préférence inférieure à 0,3 mm plus large qu'une largeur de la première ou de la deuxième partie du dispositif de verrouillage (4) maintenu dans ledit récepteur (23, 33).

6. Frein à friction selon l'une quelconque des revendications précédentes, dans lequel la partie à distance fixe (43) et, éventuellement, la deuxième partie à distance fixe (44) dans la position de freinage forme un premier angle (α) par rapport à une position neutre (N), ladite position neutre étant une position dans laquelle la première partie (41) est directement opposée à la deuxième partie (42), et dans laquelle le premier angle est compris entre 2° et 10°, de préférence entre 4° et 5°, et plus préférablement est 4°.

7. Frein à friction selon l'une quelconque des revendications précédentes, comprenant en outre une pluralité de dispositifs de verrouillage (4) qui sont disposés en série dans une direction longitudinale le long du premier curseur (2) et du deuxième curseur (3).

8. Frein à friction selon l'une quelconque des revendications précédentes, comprenant en outre un dispositif de sollicitation (6) agencé pour solliciter le au moins un dispositif de verrouillage (4) vers la position de freinage.

9. Frein à friction selon l'une quelconque des revendications précédentes, comprenant en outre un chariot (7) disposé le long du rail (1) et connecté de manière opérationnelle au premier connecteur (21) du premier curseur (2) et configuré pour être connecté au dispositif de tension (5), et dans lequel le chariot (7) comprend également un élément de libération (71) disposé le long du rail (1) à une première distance (d) du deuxième curseur dans la position de freinage, dans lequel, en outre, le premier connecteur comprend un jeu (c) qui est plus grand que la première distance (d) de telle sorte qu'une force de poussée sur le chariot provoque un contact entre l'élément de libération (71) et le deuxième curseur (3) avant de provoquer un contact entre le chariot (7) et le premier curseur (2).

10. Frein à friction selon la revendication 9, dans lequel le premier curseur (2) comprend un premier élément d'alignement (24) et le deuxième curseur (3) comprend un deuxième élément d'alignement (34), et dans lequel un mouvement du deuxième curseur (3) provoqué par l'élément de libération (71) provoque un contact entre le deuxième élément d'alignement (34) et le premier élément d'alignement (24) afin de maintenir un alignement du premier curseur (2) et du deuxième curseur (3).

11. Frein à friction selon la revendication 10, dans lequel le premier élément d'alignement (24) et le deuxième élément d'alignement (34) sont des éléments saillants disposés sur ou intégrés avec chacun du premier curseur (2) et du deuxième curseur (3).

12. Frein à friction selon la revendication 10, dans lequel l'un du premier élément d'alignement (24) et du deuxième élément d'alignement (34) est un élément saillant et dans lequel l'autre du premier et du deuxième éléments d'alignement (24, 34) est un évidement de réception avec une saillie d'extrémité (341), ledit élément saillant étant agencé pour s'étendre à travers le rail (1) dans l'évidement de réception et pour entrer en contact avec la saillie d'extrémité (341) afin de maintenir l'alignement du premier curseur (2) et du deuxième curseur (3).

13. Tendeur pour fixer une charge, le tendeur comprenant :
- un dispositif de tension (5) pour fournir une force de tension,
- une fixation (110) pour une chaîne, une corde, une sangle ou un fil métallique,
- un frein à friction (10) selon l'une quelconque des revendications 1 à 12, dans lequel le premier connecteur (21) du frein à friction (10) est connecté de manière opérationnelle au dispositif de tension (5) et le deuxième connecteur (22) du frein à friction (10) est connecté de manière opérationnelle à la fixation (110).

14. Tendeur selon la revendication 13, comprenant en outre :
- un dispositif de montage (120) pour monter le tendeur (100), dans lequel le rail (1) est connecté de manière opérationnelle au dispositif de montage.

15. Tendeur selon la revendication 13, dans lequel le tendeur (10) forme un composant intégré dans une couchette pour le transport de grumes, et dans lequel le rail (1) est connecté de manière opérationnelle à la couchette.

16. Tendeur selon la revendication 13, dans lequel le tendeur (10) forme un composant intégré dans un camion ou une remorque, et dans lequel le rail (1) est connecté de manière opérationnelle au camion ou à la remorque.

17. Tendeur selon la revendication 13, dans lequel le tendeur (100) forme un composant intégré dans un véhicule ferroviaire, et dans lequel le rail (1) est connecté de manière opérationnelle au véhicule ferroviaire.

18. Tendeur selon l'une quelconque des revendications 13 à 17, dans lequel le dispositif de tension (5) est un tendeur hydraulique, pneumatique ou électrique.
